# EUROPEAN PATENT APPLICATION

(11) **EP 4 472 058 A1**
(43) Date of publication of application: **04.12.2024**
(21) Application number: 23176345.9
(22) Date of filing: 31.05.2023
(51) Int. Cl.: H02P 3/14, H02P 3/22, H02P 3/12, B60W 20/14, H02J 7/14, H02J 7/34, B60L 7/22

(54) **A MOTOR DRIVE SYSTEM**

(71) Applicant: Hamilton Sundstrand Corporation, Charlotte, NC 28217 (US)
(72) Inventor: SEHRA, Kashav, Birmingham (GB); MANN, Jaspreet Kaur, Birmingham (GB)
(74) Representative: Dehns

(57) **Abstract**

A motor drive system comprises: a motor; a controller; a first energy source configured to supply electrical energy to the motor; a second, different energy source configured to supply electrical energy to the controller; and an energy storage device, the energy storage device being configured to supply the controller with electrical energy when there is a loss of energy from the second energy source; wherein the motor drive system is configured to, during a braking operation, charge the energy storage device with regenerative energy from the motor.

## Description

This disclosure relates to a motor drive system.

### BACKGROUND

During a braking operation, motor drive systems generate energy that is typically dissipated as heat. It is therefore desirable to improve the efficiency of the motor drive systems, and in particular, reduce energy loss through heat dissipation.

### SUMMMARY

In a first aspect, there is provided a motor drive system comprising: a motor; a controller; a first energy source configured to supply electrical energy to the motor; a second, different energy source configured to supply electrical energy to the controller; and an energy storage device, the energy storage device being configured to supply the controller with electrical energy when there is a loss of energy from the second energy source; wherein the motor drive system is configured to, during a braking operation, charge the energy storage device with regenerative energy from the motor. By using regenerative energy to charge an energy storage device that supplies a controller with electrical energy when there is a loss of power, energy lost during a braking operation can be reduced. Moreover, since the energy storage device is an existing feature of the motor drive system, the regenerative energy can be used locally, minimising transmission losses and improving efficiency.

The controller may be configured to determine a charge level of the energy storage device relative to a predetermined threshold value.

The second energy source may be configured to charge the energy storage device to the predetermined threshold value when the controller determines that the charge level of the energy storage device is below the predetermined threshold value. Charging the energy storage device to the predetermined threshold value ensures that the energy storage device can supply electrical energy to the controller for a desired hold-up time.

The second energy source may be configured to maintain the charge level of the energy storage device when the controller determines that the charge level of the energy storage device is at the predetermined threshold value. Maintaining the charge level of the energy storage device at the predetermined threshold value ensures that the energy storage device can supply electrical energy to the controller for a desired hold-up time.

The second energy source may be configured to stop charging the energy storage device when the controller determines that the charge level of the energy storage device is above the predetermined threshold value. Stopping the energy storage device from charging when the charge level of the energy storage device is above the predetermined threshold value prevents the energy storage device from reaching full capacity so that it can be charged by regenerative energy during the braking operation.

The controller may be configured to receive electrical power from the energy storage device when the controller determines that the charge level of the energy storage device is above the predetermined threshold value.

The energy storage device may be configured to supply electrical energy to the controller when the controller determines that the charge level of the energy storage device is above the predetermined threshold value. Supplying the controller with electrical energy from the energy storage device when the charge level of the energy storage device is above the predetermined threshold value allows the regenerative energy to be used locally, improving efficiency.

The motor drive system may be configured to, during the braking operation, charge the energy storage device to a charge level above the predetermined threshold with regenerative energy from the motor.

The predetermined threshold value may be a minimum charge level of the energy storage device that is required to provide a desired hold-up time for the controller. The second energy source may be at a higher or lower voltage than the first energy source.

The motor drive system may comprise a resistor configured to dissipate regenerative energy from the motor during the braking operation: (i) when the energy storage device reaches full capacity; and/or (ii) when the rate at which regenerative energy is generated exceeds the rate at which the energy storage device can be charged.

The motor drive system may comprise a DC link configured to transmit electrical energy to the motor. The motor drive system may comprise a DC/DC converter configured to reduce a voltage of the DC link by storing regenerative energy in the energy storage device.

The controller may be configured to determine that regenerative energy is being generated when a voltage of the DC link exceeds a predefined threshold value.

The motor may be configured to provide motion of a vehicle (e.g. an aircraft).

In a second aspect, there is provided an aircraft comprising a motor drive system as described above.

In a third aspect, there is provided a method of controlling a motor drive system, the method comprising: supplying electrical energy to a motor from a first energy source; supplying electrical energy to a controller from a second, different energy source; supplying the controller with electrical energy from an energy storage device when there is a loss of energy from the second energy source; and charging the energy storage device, during a braking operation, with regenerative energy from the motor.

Embodiments will be further described and explained by way of example with reference to the accompanying drawings in which
Figure 1 shows schematic of a motor drive system; and
Figure 2 shows a schematic of a motor drive system.

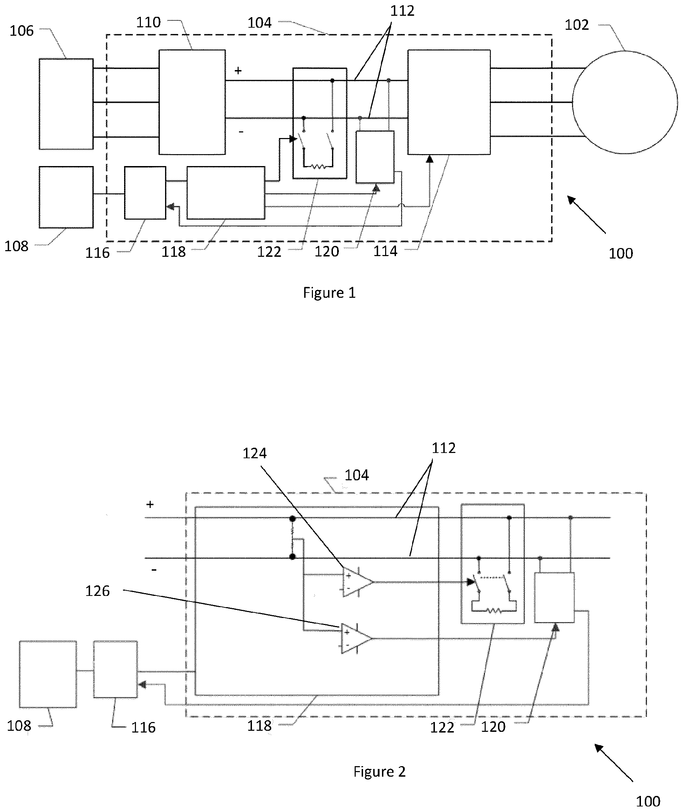

With reference to Figure 1, a motor drive system 100 comprises a motor 102, motor drive electronics 104, a first energy source 106, and a second energy source 108. The motor 102 may be a motor for a vehicle (e.g. an aircraft) and may be configured to provide motion of the vehicle (e.g. the aircraft).

The first energy source 106 is an AC voltage source (e.g. a three-phase AC voltage source) coupled to a rectifier 110. The rectifier 110 is coupled, via a DC link 112, to an inverter 114, and the inverter 114 is coupled to the motor 102. This arrangement allows electrical energy to be supplied to the motor 102 from the first energy source 106. In other embodiments, the first energy source 106 and rectifier 110 may be replaced by a DC voltage source, such as a battery (e.g. in a hybrid car).

The second energy source 108 is a DC voltage source, such as a battery (e.g. with a 28V input) coupled to an energy storage device 116. The energy storage device 116 is coupled to a controller 118. In this manner, electrical energy can be supplied to the controller 118 from one of the second energy source 108 or the energy storage device 116, as described below. The second energy source 108 may be at a higher or lower voltage than the first energy source 106.

The rectifier 110, DC link 112, inverter 114, energy storage device 116, and controller 118 form part of the motor drive electronics 104, together with a DC/DC converter 120, and a (braking) resistor 122. The DC/DC converter 120 and (braking) resistor 122 are each coupled to the controller 118 and the DC link 112. The DC/DC converter is further coupled to the energy storage device 116.

The DC link 112 is configured to transmit electrical energy to the motor 102, i.e. from the rectifier 110 to the inverter 114, while the DC/DC converter 120 is configured to reduce a voltage of the DC link 112.

The energy storage device 116 temporarily supplies electrical energy to the controller 118 when there is a loss of energy from the second energy source 108. The length of time that the energy storage device 116 is able to supply the controller 118 with electrical energy is known as the hold-up time. The energy storage device 116 may comprise one or more capacitors.

The controller 118 monitors the charge level of the energy storage device 116 and determines whether the charge level of the energy storage device 116 is above, at or below a predetermined storage threshold value (i.e. a standby voltage). The predetermined storage threshold value is a minimum charge level of the energy storage device 116 that is required to provide a desired hold-up time for the controller 118. In a motor drive system 100, the hold-up time is typically 10ms.

When the charge level of the energy storage device 116 is below the predetermined storage threshold value, the second energy source 108 charges the energy storage device 116 up to the predetermined storage threshold value and then maintains the charge level of the energy storage device 116 at the predetermined storage threshold value. This ensures that the energy storage device 116 can supply electrical energy to the controller 118 for a desired hold-up time if there is energy loss from the second energy source 108.

Moreover, the predetermined storage threshold value is not a maximum charge level of the energy storage device 116. Since the energy storage device 116 is maintained at the predetermined storage threshold value by the second energy source 108, the energy storage device 116 has reserve capacity to store energy generated during a braking (e.g. deceleration) operation and can therefore be charged above the predetermined storage threshold value (as described below).

When the charge level of the energy storage device 116 is above the predetermined storage threshold value, the controller 118 stops the second energy source 108 charging the energy storage device 116. The controller 118 is then supplied with electrical energy from the energy storage device 116 instead of the second energy source 108 until the charge level of the energy storage device 116 is at or below the predetermined storage threshold value.

As illustrated in Figure 2, the controller 118 comprises a first comparator circuit 126 and a second comparator circuit 124. The first comparator circuit 126 is coupled between the DC link 112 and the DC/DC converter 120, while the second comparator circuit 126 is coupled between the DC link 112 and the (braking) resistor 122. The controller 118 monitors the voltage of the DC link 112 using the comparator circuits 124, 126.

During a braking (e.g. deceleration) operation, the motor 102 is mechanically backdriven causing the motor 102 to act as a generator. In this state, the motor 102 supplies electrical energy to the inverter 114, which supplies electrical energy to the DC link 112. When the voltage of the DC link 112 exceeds a first predefined DC link threshold value, the excess electrical energy is known as regenerative energy. If the controller 118 determines that regenerative energy is being generated, the first comparator circuit 126 enables the DC/DC converter 120 to charge the energy storage device 116 with the regenerative energy, bringing the voltage of the DC link 112 back down to the first predefined DC link threshold value. The predefined DC link threshold value may be a maximum voltage of the DC link 112 specified for normal operation.

When the voltage of the DC link 112 is above the predetermined DC link threshold value, this process charges the energy storage device 116 above the predetermined storage threshold value. Should the energy storage device 116 reach full capacity, the DC/DC converter 120 will no longer be able to transfer energy from the DC link 112 into the energy storage device 116 and the DC link 112 voltage may continue to increase beyond the first predefined DC link threshold value. Thus, at a second predefined DC link threshold value, the second comparator circuit 124 enables the (braking) resistor 122 to dissipate the excess regenerative energy. If the rate at which regenerative energy is generated exceeds the rate at which the energy storage device 116 can be charged, the DC link voltage may exceed the second predefined DC link threshold value. In this instance, the second comparator circuit 124 enables the (braking) resistor 122 to dissipate the excess regenerative energy and bring the DC link voltage down towards the second predefined DC link threshold value while the DC/DC converter 120 transfers energy from the DC link 112 to the energy storage device 116.

The second predefined DC link threshold value is greater than the first predefined DC link threshold value.

Various aspects of the motor drive system disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1. A motor drive system comprising:
a motor;
a controller;
a first energy source configured to supply electrical energy to the motor;
a second, different energy source configured to supply electrical energy to the controller; and
an energy storage device, the energy storage device being configured to supply the controller with electrical energy when there is a loss of energy from the second energy source;
wherein the motor drive system is configured to, during a braking operation, charge the energy storage device with regenerative energy from the motor.

2. A motor drive system as claimed in claim 1, wherein the controller is configured to determine a charge level of the energy storage device relative to a predetermined threshold value.

3. A motor drive system as claimed in claim 2, wherein the second energy source is configured to charge the energy storage device to the predetermined threshold value when the controller determines that the charge level of the energy storage device is below the predetermined threshold value.

4. A motor drive system as claimed in claim 2 or 3, wherein the second energy source is configured to maintain the charge level of the energy storage device when the controller determines that the charge level of the energy storage device is at the predetermined threshold value.

5. A motor drive system as claimed in any of claims 2-4, wherein the second energy source is configured to stop charging the energy storage device when the controller determines that the charge level of the energy storage device is above the predetermined threshold value.

6. A motor drive system as claimed in any of claims 2-5, wherein the energy storage device is configured to supply electrical energy to the controller when the controller determines that the charge level of the energy storage device is above the predetermined threshold value.

7. A motor drive system as claimed in any of claims 2-6, wherein the motor drive system is configured to, during the braking operation, charge the energy storage device to a charge level above the predetermined threshold with regenerative energy from the motor.

8. A motor drive system as claimed in any of claims 2-7, wherein the predetermined threshold value is a minimum charge level of the battery storage device that is required to provide a desired hold-up time for the controller.

9. A motor drive system as claimed in any preceding claim, wherein the second energy source is at lower voltage than the first energy source.

10. A motor drive system as claimed in any preceding claim, wherein the motor drive system comprises a resistor configured to dissipate regenerative energy from the motor during the braking operation:
(i) when the energy storage device reaches full capacity; and/or
(ii) when the rate at which regenerative energy is generated exceeds the rate at which the energy storage device can be charged.

11. A motor drive system as claimed in any preceding claim, wherein the motor drive system comprises a DC link configured to transmit electrical energy to the motor and a DC/DC converter configured to reduce a voltage of the DC link.

12. A motor drive system as claimed in any preceding claim, wherein the controller is configured to determine that regenerative energy is being generated when a voltage of the DC link exceeds a predefined threshold value.

13. A motor drive system as claimed in any preceding claim, wherein the motor is configured to provide aircraft propulsion.

14. An aircraft comprising a motor drive system as claimed in any preceding claim.

15. A method of controlling a motor drive system, the method comprising:
supplying electrical energy to a motor from a first energy source;
supplying electrical energy to a controller from a second, different energy source;
supplying the controller with electrical energy from an energy storage device when there is a loss of energy from the second energy source; and
charging the energy storage device, during a braking operation, with regenerative energy from the motor.
